# EUROPÄISCHE PATENTSCHRIFT

(11) **EP 0 504 182 B1**
(45) Veröffentlichungstag und Bekanntmachung des Hinweises auf die Patenterteilung: **20.04.1994**
(21) Anmeldenummer: 90917666.1
(22) Anmeldetag: 28.11.1990
(51) Int. Cl.: C09B 25/00

(54) **VERFAHREN ZUR HERSTELLUNG VON CHINOPHTHALONDERIVATEN**
METHOD OF PREPARATION OF QUINOPHTHALONE DERIVATIVES
PROCEDE DE PRODUCTION DE DERIVES DE QUINOPHTALONE

(30) Priorität: 06.12.1989 DE 3940348
(43) Veröffentlichungstag der Anmeldung: 23.09.1992
(73) Patentinhaber: BASF Aktiengesellschaft, 67063 Ludwigshafen (DE)
(72) Erfinder: KILPPER, Gerhard, D-6719 Carlsberg (DE); HOCH, Helmut, D-6719 Weisenheim (DE)
(86) Internationale Anmeldenummer: EP9002036
(87) Internationale Veröffentlichungsnummer: WO9108264

(56) Entgegenhaltungen:
- DE-A- 2 638 528
- US-A- 1 963 374
- US-A- 3 108 109
- US-A- 3 639 405
- Chimia, vol. 24, september 1970, Sauerlander AG Verlag, (Aarau,CH) B.K. Manukian et al.: "Chinophthalone" , pages 328-339 see the whole article

## Beschreibung

Die vorliegende Erfindung betrifft ein verbessertes Verfahren zur Herstellung von Chinophthalonderivaten der allgemeinen Formel I 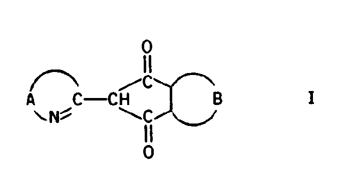
in der die Gruppierung A unsubstituierte oder substituierte heteroaromatische Ringe vervollständigt und die Gruppierung B einen aromatischen Ring vervollständigt, der unsubstituiert oder substituiert sein kann, durch Umsetzung einer methylsubstituierten heterocyclischen Verbindung der allgemeinen Formel II 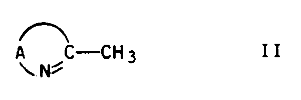
mit einem Anhydrid einer aromatischen Dicarbonsäure der allgemeinen Formel III 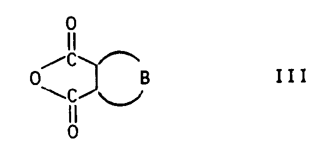
oder der entsprechenden freien Dicarbonsäure (IIIa) in Gegenwart einer Säure sowie eines organischen Lösungsmittels.

Die Chinophthalonderivate I sind bekanntermaßen gelbe Farbstoffe. Man stellt sie durch Umsetzung von 2-Methyl-chinolinderivaten oder anderen, eine aktivierte 2-Methylgruppe enthaltenden Heterocyclen mit aromatischen o-Dicarbonsäuren oder deren Anhydriden her, und zwar bisher in Gegenwart von inerten hochsiedenden Lösungsmitteln wie o-Dichlorbenzol (U.S. 1 963 374), Trichlorbenzol (Helv. Chim. Acta 50, 2200 (1967)) oder Nitrobenzol (J. Org. Chem. 23, 373 (1958)).

Die Umsetzung in Phenol als Lösungsmittel, gegebenenfalls unter Zugabe saurer Kondensationshilfsmittel wie Eisenchlorid, Kupferhalogeniden oder Phenolaten anorganischer Basen ist in der DE-A 24 35 097 beschrieben.

Diese physiologisch nicht unbedenklichen Lösungsmittel haben jedoch verschiedene verfahrenstechnische und ökologische Nachteile, so daß der Erfindung die Verwendung besser geeigneter Lösungsmittel zugrunde lag.

Demgemäß wurde ein Verfahren zur Herstellung der eingangs definierten Chinophthalonderivate I durch Umsetzung einer methylsubstituierten heterocyclischen Verbindung II mit einem Anhydrid III einer aromatischen Dicarbonsäure bzw. der entsprechenden freien Dicarbonsäure IIIa in Gegenwart einer Säure sowie eines organischen Lösungsmittels gefunden, welches dadurch gekennzeichnet ist, daß man hierzu als organisches Lösungsmittel einen Benzoesäurealkylester verwendet.

Grundsätzlich kommt es bei den erfindungsgemäß zu verwendenden Benzoesäurealkylestern auf die Art des Alkylrestes nicht an, sofern sie unter den Reaktionsbedingungen flüssig sind, wie es für Ester mit Alkylresten bis zu 6 C-Atomen meistens zutrifft. Ester höherer Alkanole, z.B. solche von 6 bis 12 C-Atomen, erfordern in der Regel das Arbeiten unter Druck.

So eignen sich Benzoesäurepropylester, Benzoesäureisopropylester, Benzoesäurebutylester sowie Benzoesäureisobutylester. Bevorzugt ist Benzoesäureethylester und besonders gute Ergebnisse erzielt man mit Benzoesäuremethylester.

Die Benzoesäurealkylester werden vorteilhaft in Form der technischen Rohester eingesetzt, wobei darin enthaltene Verunreinigungen wie z.B. p-Methylbenzoesäuremethylester nicht störend wirken.

Die Menge an Benzoesäurealkylester ist nicht kritisch und daher innerhalb eines weiten Bereichs variierbar. Sie liegt im allgemeinen zwischen der 3- bis 20-fachen Gewichtsmenge, vorzugsweise zwischen der 4- bis 12-fachen Gewichtsmenge, bezogen auf die Ausgangsverbindung II.

Als Säuren für die Kondensationsreaktion kommen die üblichen anorganischen Säuren wie Borsäure und vorzugsweise organische Säuren in Betracht. Geeignete organische Säuren sind insbesondere aliphatische C₁-C₁₂-Carbonsäuren, vorzugsweise C₁-C₃-Carbonsäuren, araliphatische Carbonsäuren, vorzugsweise Phenylessigsäure und aromatische Carbonsäuren wie Tolylsäure, vorzugsweise Benzoesäure.

Zweckmäßigerweise verwendet man 0,001 bis 1 mol, bevorzugt 0,01 bis 0,8 mol Säure pro Mol des Heterocyclus II.

Die Ausgangsverbindungen II und III bzw. IIIa sind bekannt oder nach bekannten Methoden erhältlich.

Im Hinblick auf die Farbstoffe I bevorzugte Ausgangsstoffe II sind 2-Methylpyridin, 2-Methylbenzimidazol, 2-Methylbenzthiazol, 2-Methyl-chinazolon-(4) und ganz besonders bevorzugt 8-Aminochinaldin.

Enthalten die Ausgangsverbindungen II noch freie Aminogruppen als Substituenten, so reagieren diese unter Imidbildung ebenfalls mit den Ausgangsverbindungen III. Besonders wichtige Farbstoffe dieser Art, z.B. Pigment Yellow 138, leiten sich vom 8-Aminochinaldin ab.

Als Ausgangsstoffe III eignen sich Phthalsäureanhydrid, Pyromellitsäureanhydrid, Naphthalinsäureanhydrid, Tetrabromphthalsäureanhydrid und ganz besonders bevorzugt Tetrachlorphthalsäureanhydrid.

Im Hinblick auf eine hohe Raum-Zeit-Ausbeute empfiehlt sich ein überschuß von etwa 10 bis 100 mol-% an dem Anhydrid III, bezogen auf die Menge des Heterocyclus II.

Verfahrenstechnisch geht man im allgemeinen so vor, daß man die Komponenten II und III bzw. IIIa sowie die Säure in den Benzoesäurealkylester einträgt und die Lösung unter Abdestillieren des Kondensationswassers auf die Reaktionstemperatur erhitzt.

In der Regel führt man die Reaktion zwischen 100 und 200°C, vorzugsweise beim Siedepunkt des Esters durch.

Zweckmäßigerweise wird die Umsetzung bei Normaldruck vorgenommen, man kann jedoch auch bei 1 bis 10 bar, vorzugsweise 1 bis 5 bar arbeiten.

Die Reaktionszeiten betragen üblicherweise 1 bis 10, meistens 1 bis 6 Stunden.

Eine wirtschaftlich sehr vorteilhafte Ausführungsform des erfindungsgemäßen Verfahrens besteht in der Verwendung wasserhaltiger Einsatzstoffe sowie der anschließenden azeotropen Entwässerung der Lösung während der Aufheizphase.

Die Aufarbeitung des Reaktionsgemisches auf die Verfahrensprodukte erfolgt in an sich bekannter Weise, und zwar nach dem Verdünnen mit Lösungsmitteln, die mit Wasser mischbar sind, wie z.B. Methanol und Ethanol, bei Temperaturen unterhalb 100°C sowie anschließender Filtration bei Raumtemperatur bis erhöhter Temperatur, besonders bevorzugt durch direkte Filtration der Lösung bei Temperaturen von 50 bis 110°C.

Die Isolierung der Chinophthalonderivate I nimmt man wie üblich vor, indem das Filtergut mit dem Lösungsmittel oder Wasser gewaschen und gegebenenfalls getrocknet wird.

Nach Abtrennung der Farbstoffe ist es ratsam, das Lösungsmittel von Zeit zu Zeit durch Destillation zu reinigen, wobei der Ester zu über 95 % zurückgewonnen werden kann.

Der verbleibende Rest kann im Abwasser bakteriell abgebaut werden und aus der Abluft durch alkalische Abgasreinigungsanlagen, beispielsweise mit Hilfe von Natronlauge-Wäschern, entfernt werden.

Die nach dem erfindungsgemäßen Verfahren hergestellten Chinophthalonderivate werden als Pigmentfarbstoffe für Druckfarben, als Anstrichpigmente sowie für die Spinn- und Massefärbung thermoplastischer Kunststoffe wie Polystyrol, Polyvinylchlorid, Polyamiden, Polyestern, Polyacrylnitril, Cellulosetriacetat und Celluoseacetat verwendet.

Das Verfahren gemäß der Erfindung zeichnet sich gegenüber dem Stand der Technik durch eine verfahrenstechnisch einfache Durchführung, gute Ausbeuten und hohe Produktreinheit aus, welche den direkten Einsatz für den Farbstoff-Finish oder die Pigmentformierung erlaubt.

### Beispiel

Herstellung von 2-(1-Hydroxy-4,5,6,7-tetrachlorindan-3-on-2-yl)-8-(tetrachlorphthalimido)chinolin (Pigment Yellow 138)

Eine Lösung aus
- 300 g: Benzoesäuremethylester
- 26,4 g: 8-Amino-chinaldin
- 144,4 g: Tetrachlorphthalsäureanhydrid und
- 15 g: Benzoesäure

wurde im Laufe von 2 Stunden auf 180°C erhitzt. Während der hierbei stattfindenden Kondensationsreaktion wurde das Reaktionswasser abdestilliert.

Danach wurde das Reaktionsgemisch noch 5 Stunden bei 180°C gehalten.

Die übliche Aufarbeitung durch Kristallisation, Waschen der Kristalle mit Benzoesäuremethylester, Methanol und Wasser lieferte das Chinophthalonderivat in einer Ausbeute von 112 g (= 97 % d.Th., bezogen auf 8-Aminochinaldin).

## Patentansprüche

1. Verfahren zur Herstellung von Chinophthalonderivaten der allgemeinen Formel I 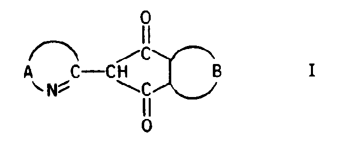 in der die Gruppierung A unsubstituierte oder substituierte heteroaromatische Ringe vervollständigt und die Gruppierung B einen aromatischen Ring vervollständigt, der unsubstituiert oder substituiert sein kann, durch Umsetzung einer methylsubstituierten heterocyclischen Verbindung der allgemeinen Formel II 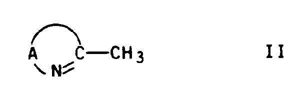 mit einem Anhydrid einer aromatischen Dicarbonsäure der allgemeinen Formel III 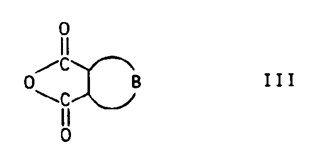 oder der entsprechenden freien Dicarbonsäure (IIIa) in Gegenwart einer Säure sowie eines organischen Lösungsmittels, dadurch gekennzeichnet, daß man hierzu als organisches Lösungsmittel einen Benzoesäurealkylester verwendet.

2. Verfahren nach Anspruch 1, dadurch gekennzeichnet, daß man als Benzoesäurealkylester Benzoesäuremethylester verwendet.

## Claims

1. A process for preparing quinophthalone derivatives of the formula I 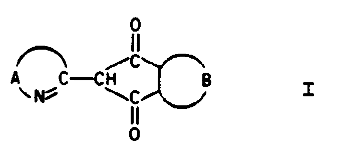 where the group A completes substituted or unsubstituted heteroaromatic rings and the group B completes a substituted or unsubstituted aromatic ring, by reacting a methyl-substituted heterocyclic compound of the formula II 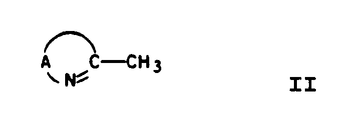 with an anhydride of an aromatic dicarboxylic acid of the formula III 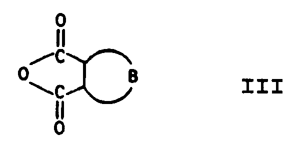 or the corresponding free dicarboxylic acid (IIIa) in the presence of an acid and of an organic solvent, which comprises using an alkyl benzoate as organic solvent.

2. A process as claimed in claim 1, wherein the alkyl benzoate used is methyl benzoate.

## Revendications

1. Procédé de préparation de dérivés de quinophtalone de formule générale I 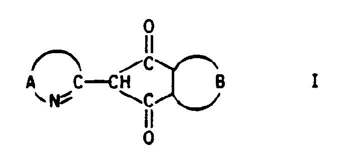 dans laquelle le groupement A complète des cycles hétéroaromatiques non substitués ou substitués et le groupement B complète un cycle aromatique, qui peut être non substitué ou substitué, par réaction d'un composé hétérocyclique méthyl-substitué de formule générale II 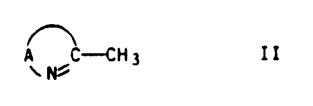 avec un anhydride d'un acide dicarboxylique aromatique de formule générale III 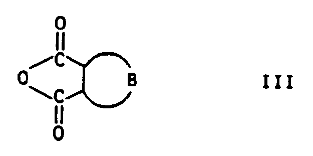 ou l'acide dicarboxylique libre correspondant (IIIa), en présence d'un acide ainsi que d'un solvant organique, caractérisé en ce que l'on utilise à cette fin un ester alkylique de l'acide benzoïque en tant que solvant organique.

2. Procédé selon la revendication 1, caractérisé en ce que l'on utilise le benzoate de méthyle en tant qu'ester alkylique de l'acide benzoïque.
